# EUROPÄISCHE PATENTSCHRIFT

(11) **EP 2 650 113 B1**
(45) Veröffentlichungstag und Bekanntmachung des Hinweises auf die Patenterteilung: **18.11.2015**
(21) Anmeldenummer: 13155877.7
(22) Anmeldetag: 20.02.2013
(51) Int. Cl.: B29D 30/00, B29D 30/18, B29D 30/32, B29D 30/48

(54) **Verfahren zum automatisierten Trennen von Kernverbänden für Fahrzeugreifen und Separatoren**
Method for the automated separation of core units for vehicle tyres and separators
Procédé de séparation automatisée d'assemblages d'âme pour pneus de véhicules et séparateurs

(30) Priorität: 10.04.2012 DE 102012103068
(43) Veröffentlichungstag der Anmeldung: 16.10.2013
(73) Patentinhaber: Continental Reifen Deutschland GmbH, 30165 Hannover (DE)
(72) Erfinder: Grillot, Jonathan, 38114 Braunschweig (DE); Schemel, Marc, 57510 Loupershouse (FR); Savard, Hubert, 57990 Ippling (FR); Koch, Tim, 30171 Hannover (DE); Niebisch, Klaus, 30926 Seelze (DE); Elsen, Patrick, 5312 Contern (LU); Bühmann, Moritz, 29227 Celle (DE)
(74) Vertreter: Widjaja, Wira

(56) Entgegenhaltungen:
- JP-A- H10 119 143
- JP-A- 2002 059 491
- JP-A- 2002 067 185
- US-A1- 2009 314 436

## Beschreibung

Die Erfindung betrifft ein Verfahren zum automatisierten Trennen von Kernverbänden für Fahrzeugreifen und Separatoren.

Bei der Konfektion von Reifenkernen für Fahrzeugreifen bringt ein so genannter "Kernbeleger" ein Profil aus Rohkautschuk, den Kernreiter, aufrecht stehend auf einen kreisringförmigen Eisenkern, den Rohkern, vollautomatisch auf. Die fertig gestellten Kerne mit Kernreiter, im weiteren nur Kernverband genannt, werden von der Konfektionsmaschine bereit gestellt und müssen dann platzsparend gelagert werden, um sie später bei der Reifenherstellung einsetzen zu können. Bei der Lagerung werden i.a. Separatoren zwischen die Kerne gelegt, damit sie nicht aneinander kleben.

Die konfektionierten Kernverbände werden bisher manuell der Reifenbaumaschine zugeführt.
Ein Nachteil dabei ist, dass ein personeller Einsatz erforderlich ist.
Die US 2009/314436A1, JP 2002 067185 A, JP 2002 059491 A und JP H10 119143 offenbaren bekannte Herstellungsverfahren von Reifenbauteilen.

Der Erfindung lag die Aufgabe zugrunde, ein Verfahren bereitzustellen, mit dem die Kernverbände automatisch von den Separatoren getrennt und anschließend automatisch der Reifenbaumaschine zugeführt werden.

Gelöst wird die Aufgabe durch ein Verfahren, mit folgenden Schritten:
a) horizontale Lagerung von Kernverbänden und Separatoren,
   wobei die Kernverbände und Separatoren auf einem Förderarm abgelegt werden,
   wobei zwischen den Kernverbänden jeweils ein Separator angeordnet ist und der Separator ein Aneinanderhaften der Kernverbände verhindert,
b) Fördern der Kernverbände mit den anliegenden Separatoren mit dem Förderarm in Richtung einer Übergabeposition,
c) Klemmen der ersten beiden Kernverbände von der Innenseite,
   wobei ein erstes und ein zweites Greifmittel durch mindestens eine Griffmulde am Separator greifen und dabei beide Kernverbände im Bereich des Reifenkerns von der Innenseite fixieren,
d) Fixieren des Separators zwischen den beiden geklemmten Kernverbänden mit einem dritten Greifmittel,
   wobei das dritte Greifmittel den Separator auf seiner Außenseite fixiert,
e) Trennung des vorderen Kernverbandes durch eine Verfahrbewegung des ersten Greifmittels in axialer Richtung zur Übergabe an die Reifenbaumaschine,
   wobei gleichzeitig der Separator durch das dritte Greifmittel und der hintere Kernverband durch das zweite Greifmittel in ihrer Position gehalten werden,
f) Verfahren des dritten Greifmittels hinter dem vorne anliegenden Separator,
   wobei das zweite Greifmittel den hinteren Kernverband in seiner Position fixiert,
g) Trennung des vorne anliegenden Separators durch eine Verfahrbewegung des dritten Greifmittels in axialer Richtung
   wobei gleichzeitig der hintere Kernverband durch das zweite Greifmittel in seiner Position gehalten wird,
h) Übergabe der abgetrennten und vereinzelten Kernverbände an eine Reifenbaumaschine,
i) Übergabe der abgetrennten Separatoren auf ein Speichermittel zur Lagerung der Separatoren.

Das Verfahren bietet u. a. den Vorteil, dass die Kernverbände vollautomatisch von den Separatoren getrennt und anschließend automatisch der Reifenbaumaschine zugeführt werden. Sowohl für die Trennung von Kernverbänden und Separatoren als auch für die Zuführung zur Reifenbaumaschine ist kein manueller Eingriff mehr erforderlich, wodurch insbesondere Personal an der Reifenbaumaschine eingespart werden kann. Ein weiterer Vorteil besteht darin, dass die Kernverbände vor der Zuführung zur Reifenbaumaschine platzsparend gelagert werden. Auf diese Weise wird gewährleistet, dass immer eine ausreichende Anzahl von Kernverbänden gespeichert und bereit gestellt werden können. Ein weiterer Vorteil des Verfahrens besteht darin, dass das Trennen der Kernverbände von den Separatoren mit einer hohen Geschwindigkeit erfolgt. Außerdem erfolgt die Übergabe des abgetrennten Kernverbandes zur Reifenbaumaschine ebenfalls mit einer hohen Geschwindigkeit, ohne dabei die Kernverbände zu beschädigen.

In einer vorteilhaften Weiterbildung der Erfindung ist vorgesehen, dass bei Schritt b) das Fördern der Kernverbände gegen einen Anschlag im Bereich der Übergabeposition erfolgt. Dadurch erfolgt eine Vorpositionierung der vorderen Kernverbände mit den anliegenden Separatoren, um diese anschließend sicher mit den Greifmitteln fixieren zu können.

In einer weiteren vorteilhaften Weiterbildung der Erfindung ist vorgesehen, dass das erste und zweite Greifmittel in Form von L-förmigen Fingern ausgebildet sind.
Mit den L-förmigen Fingern erfolgt ein sicheres Eingreifen in die Griffmulden an den Separatoren. Die L-förmigen Finger sind somit an die Griffmulden der Separatoren angepasst.

In einer weiteren vorteilhaften Weiterbildung der Erfindung ist vorgesehen, dass das erste und zweite Greifmittel zumindest zweiteilig ausgebildet ist und den jeweiligen Kernverband auf der Innenseite an zwei Flächen des jeweiligen Kernverbandes halten. Dadurch können die Kernverbände auf der Innenseite sicher gegriffen und fixiert werden.

In einer weiteren vorteilhaften Weiterbildung der Erfindung ist vorgesehen, dass bei Schritt e) das dritte Greifmittel den Separator von außen mit einem vertikal nach unten verfahrbaren Niederhalter fixiert wird.

Dadurch kann der Separator vor der Trennung des anliegenden Kernverbandes mit einer hohen Kraft an seiner Position fixiert werden.

In einer weiteren vorteilhaften Weiterbildung der Erfindung ist vorgesehen, dass die Separatoren im Querschnitt eine ausgeprägte Krümmung aufweisen.
Durch diese Krümmung passen sich die Separatoren der Querschnittskontur des Kernreiters an und tragen somit dazu bei, dass die Kernreiter ihre Querschnittskontur beibehalten.

In einer weiteren vorteilhaften Weiterbildung der Erfindung ist vorgesehen, dass die Kernreiter der Kernverbände eine ausgeprägte Krümmung aufweisen.
Die vorkonturierte Krümmung der Kernreiter verbessert die Reifenherstellung mit der Reifenbaumaschine.

Anhand mehrerer Ausführungsbeispiele soll die Erfindung näher erläutert werden. Es zeigen:
- Fig. 1:: ein Ausführungsbeispiel des Verfahrens
- Fig. 2:: den Verfahrensschritt, bei dem die Abtrennung des vorderen Kernverbandes erfolgt
- Fig. 3:: den Verfahrensschritt, bei dem die Trennung des anliegenden Separators erfolgt

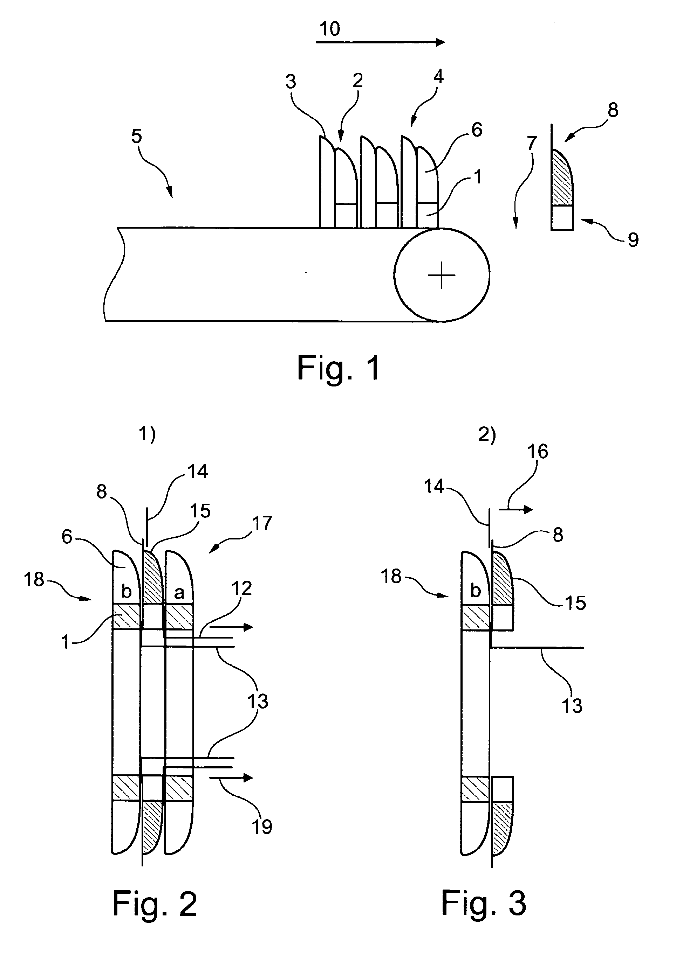

Die Fig. 1 zeigt ein Ausführungsbeispiel des Verfahrens. Auf dem schematisch dargestellten Förderarm 5 sind eine Vielzahl 4 von nebeneinanderliegenden Kernverbänden 2 und Separatoren 3 angeordnet. Jeweils ein Kernverband 2 besteht aus einem Reifenkern 1 und dem Kernreiter bzw. Apex 6. Der Kernverband 2 ist in einer Querschnittsansicht dargestellt, wobei nur der obere Teil zu sehen ist, der an der Oberseite des Förderarmes 5 horizontal gelagert ist. Die Kernverbände 2 werden jeweils durch einen Separator 3 getrennt, die in der dargestellten Weise hintereinander anliegen. Die Separatoren 3 dienen dazu, zu verhindern, dass die Kernverbände aneinander haften. Der Förderarm 5 ist in Form einer Förderkette für die Aufnahme und das Zwischenspeichern von Kernverbänden und Separatoren ausgebildet. Die Kernverbände 2 und die Separatoren 3 werden in Förderrichtung 10 zur Übergabeposition 7 gefördert. Dabei stoßen sie zunächst gegen einen nicht dargestellten Anschlag, der den vorderen Kernverband für die Trennung von Kernverband und anliegendem Separator vorbereitet. Die Separatoren 3 weisen an der Außenseite eine Nase 8 auf, die eine bessere Fixierung mit dem dritten Greifmittel ermöglicht. Auf der Innenseite weisen die Separatoren Griffmulden 9 auf, die ein Eingreifen mit dem ersten und dem zweiten Greifmittel ermöglichen.

Fig. 2 zeigt den Verfahrensschritt, bei dem der vordere Kernverband 17 von dem eingeklemmten Separator 15 getrennt wird. Zunächst werden das erste Greifmittel 12 und das zweite Greifmittel 13 in den Griffmulden des Separators 15 positioniert, um dort die Kernverbände 17 und 18 zu fixieren. Gleichzeitig wird der eingeklemmte Separator 15 von außen mit dem dritten Greifmittel 14 an der Nase 8 des Separators in seiner Position fixiert. In einem nächsten Schritt wird das erste Greifmittel 12 in axiale Richtung 19 verfahren, wobei die Trennung von dem anliegenden Separator 15 erfolgt. Anschließend erfolgt die Übergabe des abgetrennten Kernverbandes an die Reifenbaumaschine. Das erste Greifmittel 12 und das zweite Greifmittel 13 sind bei diesem Ausführungsbeispiel zweiteilig ausgebildet. Die Kernverbände 17 und 18 werden oben und unten an den jeweiligen Reifenkernen 1 auf der Innenseite fixiert und gegriffen.

Fig. 3 zeigt den Verfahrensschritt, bei dem der vordere Separator 15 von dem dahinterliegenden Kernverband 18 getrennt wird. Das dritte Greifmittel 14 wird bei diesem Vorgang zunächst hinter die Nase 8 verfahren. Anschließend erfolgt ein Abziehen des Separators 15 in Abnahmerichtung 16, wobei die Trennung des Separators 15 vom dahinterliegenden Kernverband 18 erfolgt. Anschließend erfolgt wiederum der in Fig. 2 dargestellte Verfahrensschritt, bei dem die beiden Greifmittel 12 und 13 in die Griffmulden des eingeklemmten Separators greifen. Die abgetrennten Kernverbände werden jeweils automatisch an die Reifenbaumaschine übergeben, wodurch kein manueller Eingriff durch einen Bediener mehr erforderlich ist.

### Bezugszeichenliste

(ist Teil der Beschreibung)
- 1: Reifenkern
- 2: Kernverband aus Reifenkern und Kernreiter
- 3: Separatoren
- 4: Vielzahl von nebeneinander liegenden Kernverbänden und Separatoren
- 5: Förderarm in Form einer Förderkette für die Aufnahme und Zwischenspeichern von Kernverbänden und Separatoren
- 6: Kernreiter bzw. Apex
- 7: Übergabeposition
- 8: Nase des Separators
- 9: Griffmulde des Separators
- 10: Förderrichtung zur Reifenbaumaschine
- 11: Übergabebewegung des abgetrennten Separators zum dritten Förderarm
- 12: erstes Greifmittel
- 13: zweites Greifmittel
- 14: drittes Greifmittel
- 15: eingeklemmter Separator
- 16: Abnahmerichtung der Separatoren
- 17: vorderer Kernverband
- 18: hinterer Kernverband
- 19: axiale Richtung

## Patentansprüche

1. Verfahren zum automatisierten Trennen von Kernverbänden (2) für Fahrzeugreifen und Separatoren (3) mit folgenden Schritten:
a) horizontale Lagerung von Kernverbänden (2) und Separatoren (3),
wobei die Kernverbände (2) und Separatoren (3) auf einem Förderarm (5) abgelegt werden,
wobei zwischen den Kernverbänden (2) jeweils ein Separator (3) angeordnet ist und der Separator (3) ein Aneinanderhaften der Kernverbände (2) verhindert,
b) Fördern der Kernverbände (3) mit den anliegenden Separatoren (3) mit dem Förderarm (5) in Richtung einer Übergabeposition (7),
c) Klemmen der ersten beiden Kernverbände (17, 18) von der Innenseite,
wobei ein erstes und ein zweites Greifmittel (12, 13) durch mindestens eine Griffmulde (9) am Separator (15) greifen und dabei beide Kernverbände (17, 18) im Bereich des Reifenkerns (1) von der Innenseite fixieren,
d) Fixieren des Separators (15) zwischen den beiden geklemmten Kernverbänden (17, 18) mit einem dritten Greifmittel (14),
wobei das dritte Greifmittel (14) den Separator (15) auf seiner Außenseite fixiert,
e) Trennung des vorderen Kernverbandes (17) durch eine Verfahrbewegung des ersten Greifmittels (12) in axialer Richtung (19) zur Übergabe an die Reifenbaumaschine, wobei gleichzeitig der Separator (15) durch das dritte Greifmittel (14) und der hintere Kernverband (18) durch das zweite Greifmittel (13) in ihrer Position gehalten werden,
f) Verfahren des dritten Greifmittels (14) hinter dem vorne anliegenden Separator (15), wobei das zweite Greifmittel (13) den hinteren Kernverband (18) in seiner Position fixiert,
g) Trennung des vorne anliegenden Separators (15) durch eine Verfahrbewegung des dritten Greifmittels (14) in axialer Richtung (19),
wobei gleichzeitig der hintere Kernverband (18) durch das zweite Greifmittel (13) in seiner Position gehalten wird,
h) Übergabe der abgetrennten und vereinzelten Kernverbände (2) an eine Reifenbaumaschine,
i) Übergabe der abgetrennten Separatoren (15) auf ein Speichermittel zur Lagerung der Separatoren.

2. Verfahren nach Anspruch 1,
**dadurch gekennzeichnet, dass**
bei Schritt b) das Fördern der Kernverbände (2) gegen einen Anschlag im Bereich der Übergabeposition (7) erfolgt.

3. Verfahren nach einem der vorhergehenden Ansprüche,
**dadurch gekennzeichnet, dass**
das erste und zweite Greifmittel (12, 13) in Form von L-förmigen Fingern ausgebildet ist.

4. Verfahren nach einem der vorhergehenden Ansprüche,
**dadurch gekennzeichnet, dass**
das erste und zweite Greifmittel (12, 13) zumindestens zweiteilig ausgebildet ist und den jeweiligen Kernverband (17, 18) auf der Innenseite an zwei Flächen des jeweiligen Kernverbandes (17, 18) halten.

5. Verfahren nach einem der vorhergehenden Ansprüche,
**dadurch gekennzeichnet, dass**
bei Schritt e) das dritte Greifmittel (14) den Separator (15) von außen mit einem vertikal nach unten verfahrbaren Niederhalter fixiert wird.

6. Verfahren nach einem der vorhergehenden Ansprüche,
**dadurch gekennzeichnet, dass**
die Separatoren (3) im Querschnitt eine ausgeprägte Krümmung aufweisen.

7. Verfahren nach einem der vorhergehenden Ansprüche,
**dadurch gekennzeichnet, dass**
die Kernreiter (6) der Kernverbände (2) eine ausgeprägte Krümmung aufweisen.

## Claims

1. Method for the automated separation of bead assemblies (2) for vehicle tyres and separators (3) with the following steps:
a) horizontally mounting bead assemblies (2) and separators (3),
wherein the bead assemblies (2) and separators (3) are placed down on a conveying arm (5),
wherein a separator (3) is respectively arranged between the bead assemblies (2) and the separator (3) prevents the bead assemblies (2) from sticking to one another,
b) conveying the bead assemblies (2) with the adjacent separators (3) by the conveying arm (5) in the direction of a transfer position (7),
c) clamping the first two bead assemblies (17, 18) from the inner side,
wherein a first and a second gripping means (12, 13) grip on the separator (15) by at least one gripping recess (9) and thereby fix both bead assemblies (17, 18) in the region of the tyre bead (1) from the inner side,
d) fixing the separator (15) between the two clamped bead assemblies (17, 18) by a third gripping means (14),
wherein the third gripping means (14) fixes the separator (15) on its outer side,
e) separating the front bead assembly (17) by a displacing movement of the first gripping means (12) in the axial direction (19) for the transfer to the tyre building machine,
wherein at the same time the separator (15) is held in its position by the third gripping means (14) and the rear bead assembly (18) is held in its position by the second gripping means (13),
f) displacing the third gripping means (14) behind the front-adjacent separator (15),
wherein the second gripping means (13) fixes the rear bead assembly (18) in its position,
g) separating the front-adjacent separator (15) by a displacing movement of the third gripping means (14) in the axial direction (19),
wherein the rear bead assembly (18) is at the same time held in its position by the second gripping means (13),
h) transferring the detached and individually separated bead assemblies (2) to a tyre building machine,
i) transferring the detached separators (15) to a storage means for storing the separators.

2. Method according to Claim 1,
**characterized in that**
in step b), the conveying of the bead assemblies (2) takes place up to a stop in the region of the transfer position (7).

3. Method according to one of the preceding claims,
**characterized in that**
the first and second gripping means (12, 13) take the form of L-shaped fingers.

4. Method according to one of the preceding claims,
**characterized in that**
the first and second gripping means (12, 13) are formed at least as two parts and hold the respective bead assembly (17, 18) on the inner side on two surfaces of the respective bead assembly (17, 18).

5. Method according to one of the preceding claims,
**characterized in that**
in step e), the third gripping means (14) fixes the separator (15) from the outside with a vertically downwardly displaceable hold-down device.

6. Method according to one of the preceding claims,
**characterized in that** the separators (3) have a pronounced curvature in cross section.

7. Method according to one of the preceding claims,
**characterized in that**
the bead fillers (6) of the bead assemblies (2) have a pronounced curvature.

## Revendications

1. Procédé de séparation automatisée d'assemblages d'âme (2) pour pneus de véhicule et de séparateurs (3), comprenant les étapes suivantes:
a) stockage horizontal d'assemblages d'âme (2) et de séparateurs (3), dans lequel les assemblages d'âme (2) et les séparateurs (3) sont déposés sur un bras de transport (5), dans lequel un séparateur (3) est chaque fois disposé entre les assemblages d'âme (2) et le séparateur (3) empêche une adhérence mutuelle des assemblages d'âme (2),
b) transport des assemblages d'âme (2) avec les séparateurs accolés (3) avec le bras de transport (5) en direction d'une position de transfert (7),
c) serrage des deux premiers assemblages d'âme (17, 18) par le côté intérieur, dans lequel un premier et un deuxième moyens de saisie (12, 13) saisissent au moyen d'au moins une alvéole de saisie (9) sur le séparateur (15) et fixent ainsi les deux assemblages d'âme (17, 18) dans la région de l'âme de pneu (1) par le côté intérieur,
d) fixation du séparateur (15) entre les deux assemblages d'âme serrés (17, 18) avec un troisième moyen de saisie (14), dans lequel le troisième moyen de saisie (14) fixe le séparateur (15) sur son côté extérieur,
e) séparation de l'assemblage d'âme antérieur (17) par un mouvement de déplacement du premier moyen de saisie (12) en direction axiale (19) jusqu'au transfert à la machine de fabrication de pneus, dans lequel simultanément on maintient dans leur position le séparateur (15) au moyen du troisième moyen de saisie (14) et l'assemblage d'âme postérieur (18) au moyen du deuxième moyen de saisie (13),
f) déplacement du troisième moyen de saisie (14) derrière le séparateur placé en avant (15), dans lequel le deuxième moyen de saisie (13) fixe l'assemblage d'âme postérieur (18) dans sa position,
g) séparation du séparateur placé en avant (15) par un mouvement de déplacement du troisième moyen de saisie (14) en direction axiale (19), dans lequel simultanément on maintient dans sa position l'assemblage d'âme postérieur (18) au moyen du deuxième moyen de saisie (13),
h) transfert des assemblages d'âme séparés et dissociés (2) à une machine de fabrication de pneus,
i) transfert des séparateurs séparés (15) sur un moyen d'accumulation pour le stockage des séparateurs.

2. Procédé selon la revendication 1, **caractérisé en ce qu'**à l'étape b), le transport des assemblages d'âme (2) est effectué contre une butée dans la région de la position de transfert (7).

3. Procédé selon l'une quelconque des revendications précédentes, **caractérisé en ce que** le premier et le deuxième moyens de saisie (12, 13) sont réalisés sous forme de doigts en forme de L.

4. Procédé selon l'une quelconque des revendications précédentes, **caractérisé en ce que** le premier et le deuxième moyens de saisie (12, 13) sont réalisés en au moins deux parties et retiennent l'assemblage d'âme respectif (17, 18) sur le côté intérieur sur deux faces de l'assemblage d'âme respectif (17, 18).

5. Procédé selon l'une quelconque des revendications précédentes, **caractérisé en ce qu'**à l'étape e) le troisième moyen de saisie (14) fixe le séparateur (15) par l'extérieur avec un dispositif de serrage déplaçable verticalement vers le bas.

6. Procédé selon l'une quelconque des revendications précédentes, **caractérisé en ce que** les séparateurs (3) présentent en section transversale une courbure marquée.

7. Procédé selon l'une quelconque des revendications précédentes, **caractérisé en ce que** les onglets d'âme (6) des assemblages d'âme (2) présentent une courbure marquée.
